# EUROPEAN PATENT APPLICATION

(11) **EP 4 806 696 A1**
(43) Date of publication of application: **16.09.2026**
(21) Application number: 25747997.2
(22) Date of filing: 27.01.2025
(51) Int. Cl.: B60K 35/10, B60Q 3/10, B60R 16/00, B60R 16/033

(54) **ONE-KEY CONTROL DEVICE**

(30) Priority: 29.01.2024 CN 202420216936 U
(71) Applicant: Zhejiang Geely Holding Group Co., Ltd., Hangzhou, Zhejiang 310051 (CN); Zhejiang Geely Auto Spare Parts Co., Ltd., Ningbo, Zhejiang 315336 (CN)
(72) Inventor: GUAN, Jun, Hangzhou, Zhejiang 310051 (CN); SANG, Jiaxi, Hangzhou, Zhejiang 310051 (CN); ZHANG, Zhibin, Hangzhou, Zhejiang 310051 (CN); JIN, Bingyao, Hangzhou, Zhejiang 310051 (CN)
(74) Representative: Murgitroyd & Company
(86) International application number: PCT/CN2025/075411
(87) International publication number: WO 2025/162434

(57) **Abstract**

A one-key control device (100). The device includes a control module (10), an upper module (20), and a battery module (30). The control module (10) includes a button (12) and a signal transmitting unit, where when the button is pressed, the signal transmitting unit is triggered to transmit a control signal. The upper module (20) is elastically supported above the control module (10), and the upper module (20) is configured to, under a pressing force, enable the button (12) to be pressed. The battery module (30) is arranged below the control module (10), and is electrically connected to the control module (10) to supply power to the control module (10).

## Description

### CROSS-REFERENCE TO RELATED APPLICATIONS

The present disclosure claims priority to Chinese Patent Application No. 2024202169367, filed Jan. 29, 2024, entitled "One-key Control Device", which is incorporated herein by reference in its entirety.

### TECHNICAL FIELD

This application relates to, but is not limited to, the field of vehicle technologies, and in particular, to a one-key control device.

### BACKGROUND

A new wave of automakers has brought minimalism into the field of vehicle manufacturing, for example, a traditional physical hard button is integrated into a large central control screen, but problems such as deep operation level of the large central control screen and low voice instruction recognition rate can distract the driver and bring driving safety hazards.

### SUMMARY

The following is a summary of subject matter described in detail herein. This summary is not intended to limit the scope of the claims.

The present application provides a one-key control device, including: a control module, an upper module and a battery module. The control module includes a button and a signal transmitting unit, where when the button is pressed, the signal transmitting unit is triggered to transmit a control signal. The upper module is elastically supported above the control module, and the upper module is configured to, under a pressing force, enable the button to be pressed. The battery module is arranged below the control module, and the battery module is electrically connected to the control module to supply power to the control module.

Optionally, the upper module includes an upper cover plate and a lighting and light homogenizing assembly that are connected with each other, the upper cover plate is provided with a functional identification pattern that transmits light, the lighting and light homogenizing assembly is located below the upper cover plate and includes a light source, the light source is electrically connected to the control module, and the light source is controlled to emit light to illuminate the functional identification pattern.

Optionally, the upper cover plate is detachably connected to the lighting and light homogenizing assembly by magnetic attraction.

Optionally, a gap is reserved between an edge portion of the upper cover plate facing the lower surface of the lighting and light homogenizing assembly and the lighting and light homogenizing assembly, and a portion of the upper surface of the upper cover plate facing the gap is provided as a pressing portion that can be pressed when the upper cover plate is disassembled.

Optionally, at least two gaps are provided, and the at least two gaps are spaced apart by 180° at the edge portion.

Optionally, one of the upper cover plate and the lighting and light homogenizing assembly is provided with a positioning structure, the other of the upper cover plate and the lighting and light homogenizing assembly is provided with a positioning mating structure, and the positioning structure and the positioning mating structure are engaged and positioned in a plane parallel to the upper cover plate.

Optionally, the lighting and light homogenizing assembly further includes an assembly base configured to mount the light source and a light homogenizing film mounted on the assembly base, and the light homogenizing film is located directly below the functional identification pattern and is disposed within a light-emitting range of the light source.

Optionally, the one-key control device further includes a light shielding film disposed between the upper cover plate and the lighting and light homogenizing assembly, where the light shielding film is made of a light absorbing material, and a portion of the light shielding film facing the light homogenizing film is provided with a through hole.

Optionally, the one-key control device further includes a housing configured to accommodate the control module and the battery module, wherein an elastic support member is provided inside the housing, and the upper module is supported by the elastic support member.

Optionally, the elastic support member includes a cantilever foot integrally formed on an inner surface of the housing.

This application provides a one-key control device, where the device, by pressing the upper module, enables the button to be pressed, which may trigger the signal transmitting unit to transmit a control signal, to implement a deep instruction of a central control screen in one-key unlocking, thereby avoiding a complex operation of the driver and improving driving safety. In addition, the button is shielded by the upper module, and is hidden inside the device, so that the appearance of the device is more concise and beautiful, and more integrated. In addition, the upper module is elastically supported above the control module, and after the pressing force is released, the upper module can be automatically reset to facilitate the next pressing operation by the user.

Other aspects will become apparent upon reading and understanding the drawings and detailed description.

### BRIEF DESCRIPTION OF DRAWINGS

FIG. 1 is a schematic diagram of a one-key control device according to an exemplary embodiment of the present disclosure.
FIG. 2 is an exploded view of the one-key control device shown in FIG. 1.
FIG. 3 is a front view of a control module.
FIG. 4 is a side view of the control module.
FIG. 5 is a schematic diagram of a lower surface of the lighting and light homogenizing assembly shown in FIG. 2.
FIG. 6 is a schematic diagram of an upper surface of the lighting and light homogenizing assembly shown in FIG. 2.
FIG. 7 is a schematic diagram of a lower surface of the upper cover plate shown in FIG. 2.
FIG. 8 is a schematic diagram illustrating a gap between edges of a lower surface of an upper cover plate and an upper surface for the lighting and light homogenizing assembly.
FIG. 9 is a schematic diagram of a partial structure of a housing.

### DETAILED DESCRIPTION

Exemplary embodiments will be described in detail herein, examples of which are illustrated in the accompanying drawings. When the following description relates to the accompanying drawings, unless specified otherwise, the same numerals in different drawings represent the same or similar elements. Embodiments described in the exemplary embodiments below are not intended to represent all embodiments consistent with the present disclosure. On the contrary, they are merely examples of apparatuses and methods consistent with some aspects of this application.

Terms used in the present disclosure is only for the purpose of describing particular embodiments and is not intended to limit the present disclosure. Unless otherwise defined, technical terms or scientific terms used in the present disclosure should have a general meaning understood by those skilled in the art to which the present disclosure belongs. Terms such as "first" "second" and the like used in the present disclosure do not indicate any order, quantity, or importance, but are merely used to distinguish different components. Likewise, terms such as "a" or "an" do not indicate the quantity limitation, but indicate that there is at least one, and a singular reference will be explicitly stated only when specifically intended. "a multiple of" or "several" means two or more. Unless otherwise indicated, terms such as "front," "rear," "lower," and/or "upper" are for ease of illustration only and are not limited to one position or one spatial orientation. Like words such as "comprise" or "include" mean that elements or objects appearing before "comprise" or "include" cover elements or objects listed after "comprise" or "include" and equivalents thereof, and do not exclude other elements or objects. The terms "connected" or "coupled" and the like are not limited to physical or mechanical connections, and may include electrical connections, whether direct or indirect.

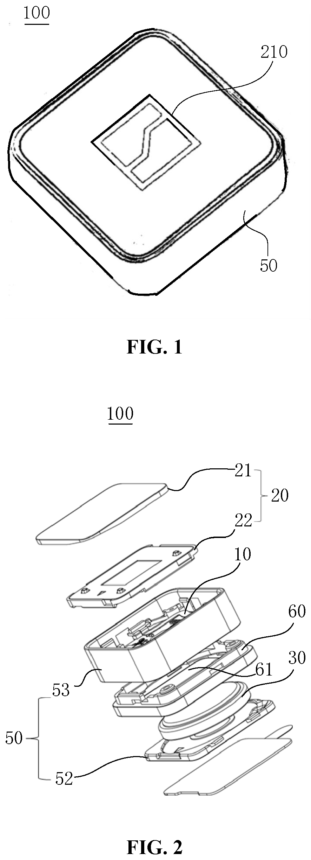

Please refer to FIG. 1, FIG. 1 is a schematic diagram of a one-key control device 100 according to an exemplary embodiment of the present disclosure.

The present disclosure provides a one-key control device 100 (referred to as a device 100 below) applied to a vehicle, and the device 100 may unlock a deep instruction for a central control screen by one-key. The central control screen may display a human-computer interaction interface, and the deep instruction is an instruction that can be unlocked only after at least two operations are performed on the human-computer interaction interface. The deep instructions can control the activation or deactivation of applications such as a navigation software or a music player. For example, the device 100 may be interconnected to a central displayer in a vehicle through Bluetooth, to provide a point-to-point quick entry for a user to execute a corresponding instruction, thereby avoiding cumbersome operation steps and improving driving safety. The device 100 may be configured to unlock an instruction for the central control screen, for example, a plurality of devices 100 may be provided for the vehicle, and each device 100 may correspondingly unlock different instructions for the central control screen.

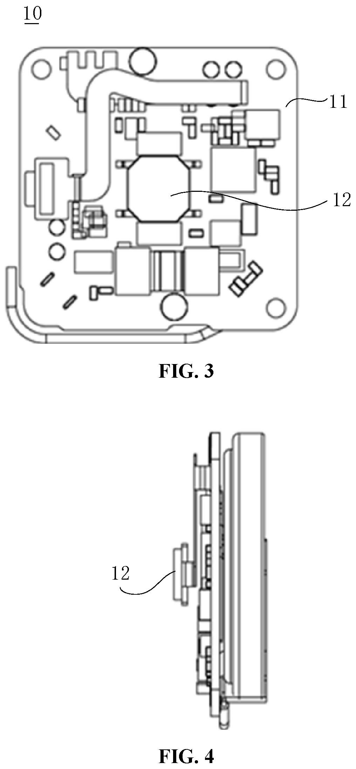

Please refer to FIGs. 2 to 4, FIG. 2 is an exploded view of the one-key control device 100 shown in FIG. 1. FIG. 3 is a front view of the control module 10. FIG. 4 is a side view of the control module 10.

Specifically, the device 100 includes a control module 10, an upper module 20, and a battery module 30. The upper module 20 is elastically supported above the control module 10, and the battery module 30 is below the control module 10.

The control module 10 includes a mainboard 11, a button 12 on the mainboard 11, and a signal transmitting unit (not shown), where when the button 12 is pressed, the signal transmitting unit may be triggered to transmit a control signal, to implement a deep instruction for a central control screen in one-key unlocking, and the signal transmitting unit may be a wireless communication module. The upper module 20 is configured to enable the button 12 to be pressed under a pressing force. The battery module 30 is electrically connected to the control module 10 to supply power to the control module 10.

It can be learned from the above description that the device 100, by pressing the upper module 20, enables the button 12 to be pressed, which may trigger the signal transmitting unit to transmit a control signal, to implement a deep instruction for a central control screen in one-key unlocking, thereby avoiding a complex operation of the driver and improving driving safety. In addition, the button 12 is shielded by the upper module 20, and is hidden inside the device 100, so that the appearance of the device 100 is more concise and beautiful. It should also be noted that the upper module 20 is elastically supported above the control module 10, and when the pressing force is released, the upper module 20 can be automatically reset to facilitate the next pressing operation by the user.

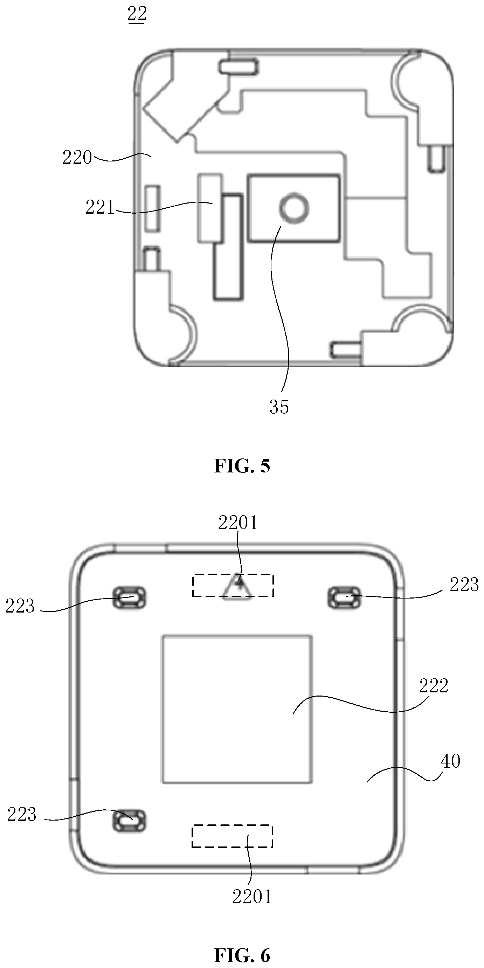

Referring to FIGs. 2, 5 and 6, FIG. 5 is a schematic diagram of a lower surface of the lighting and light homogenizing assembly 22 shown in FIG. 2. FIG. 6 is a schematic diagram of an upper surface of the lighting and light homogenizing assembly 22 shown in FIG. 2.

In an embodiment, the upper module 20 includes an upper cover plate 21 and a lighting and light homogenizing assembly 22 that are connected with each other, the lighting and light homogenizing assembly 22 is located below the upper cover plate 21, the upper cover plate 21 is provided with a functional identification pattern 210 (referring to FIG. 1) that transmits light, and the functional identification pattern 210 may be disposed in a central region of the upper cover plate 21. The lighting and light homogenizing assembly 22 includes an assembly base 220 and a light source 221 mounted on the assembly base 220, the light source 221 may be electrically connected to the control module 10 through a flexible circuit board, and the light source 221 may be controlled to emit light to illuminate the functional identification pattern 210. In this way, by using the lighting and light homogenizing assembly 22, the light emitted by the light source 221 can illuminate the functional identification pattern 210, so that the functional identification pattern 210 is distinctly different in color from other parts of the upper cover plate 21, which is convenient for the user to know that the device 100 is in an operation state. For example, the light source 221 may be configured to emit light when the upper module 20 is pressed by the user and the button 12 is triggered. One or more light sources 221 may be provided, and the light source 221 may be a light-emitting diode (LED) lamp bead. The upper cover plate 21 may be a square cover plate, but is not limited thereto.

In an embodiment, the light-absorbing material may be coated on the inner surface of the upper cover plate 21 by spraying, and the light-transmitting region is reserved in the region of the functional identification pattern 210, so that a higher brightness can be obtained at the functional identification pattern 210 under the illumination of the light emitted by the light source 221.

In an embodiment, the lighting and light homogenizing assembly 22 further includes a light homogenizing film 222 mounted on the assembly base 220, the light homogenizing film 222 is located directly below the functional identification pattern 210, and the light homogenizing film 222 is disposed within a light-emitting range of the light source 221. The light homogenizing film 222 can transmit and homogenize the light emitted by the light source 221, so that the light below the functional identification pattern 210 is more uniform. Specifically, an upper surface of the assembly base 220 is provided with a groove (not shown), and the light homogenizing film 222 is mounted in the groove in a mounting manner including but not limited to bonding. The light source 221 is arranged on the side of the light homogenizing film 222, the region where the light source 221 is located is communicated with the groove, and the light emitted by the light source 221 is emitted to the light homogenizing film 222 and transmitted by the light homogenizing film 222. Optionally, the assembly base 220 may be made of a light-absorbing material, or a light-absorbing coating may be coated on upper and lower surfaces of the assembly base 220 to avoid light leakage.

To prevent damage to the button 12 under excessive downward pressure, a button gasket 35 can be placed on the surface of the assembly base 220 facing the button 12, and the button gasket 35 may be made of a flexible material, so that the hard impact can be converted into the flexible impact. The button gasket 35 may be bonded to the assembly base 220, but is not limited thereto.

In an embodiment, as shown in FIG. 6, the device 100 further includes a light shielding film 40 disposed between the assembly base 220 and the upper cover plate 21, a part of the light shielding film 40 facing the functional identification pattern 210 is provided with a through hole, and other parts of the light shielding film 40 are shielded above the assembly base 220. The light shielding film 40 may be made of a black light-absorbing material, which serves to shield the light.

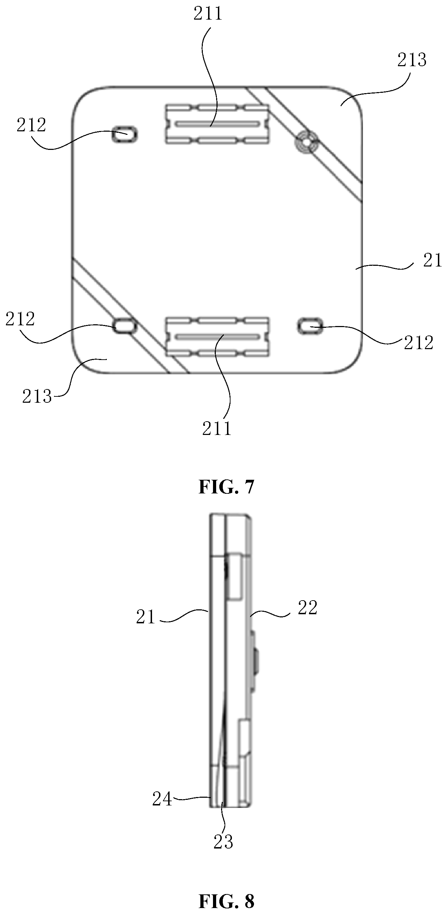

Referring to FIGs. 6 and 7, FIG. 7 is a schematic diagram of a lower surface of the upper cover plate 21 shown in FIG. 2.

In an embodiment, the upper cover plate 21 is detachably connected to the lighting and light homogenizing assembly 22 by magnetic attraction. Specifically, the upper cover plate 21 is provided with a first magnetic pole 211, the upper surface of the assembly base 220 is provided with a second magnetic pole 2201, and the first magnetic pole 211 and the second magnetic pole 2201 have opposite polarities and attract each other, thereby keeping the upper cover plate 21 and the assembly base 220 relatively fixed. The magnetic attraction structure is easy to set and easy to disassemble. A plurality of first magnetic poles 211 and a plurality of second magnetic poles 2201 may be provided and attracted in one-to-one correspondence with each other. In this embodiment, there are two first magnetic poles 211 and two second magnetic poles 2201. A dashed line in FIG. 6 indicates that the second magnetic pole 2201 is shielded by the light shielding film 40.

In an embodiment, one of the upper cover plate 21 and the lighting and light homogenizing assembly 22 is provided with a positioning structure 212, the other of the upper cover plate 21 and the lighting and light homogenizing assembly 22 is provided with a positioning mating structure 223, and the positioning structure 212 and the positioning mating structure 223 are engaged and positioned in a plane parallel to the upper cover plate 21. One of the positioning structure 212 and the positioning mating structure 223 is provided with a positioning hole, the other of the positioning structure 212 and the positioning mating structure 223 is provided with a positioning post, and the positioning post is inserted into the positioning hole. In this way, the relative sliding between the upper cover plate 21 and the lighting and light homogenizing assembly 22 can be prevented, and the position stability between the upper cover plate 21 and the lighting and light homogenizing assembly 22 can be ensured.

In this embodiment, the positioning structure 212 is configured as a positioning hole, the positioning mating structure 223 is configured as a positioning post, and the depth of the positioning hole is less than the thickness of the upper cover plate 21, that is, the positioning hole does not penetrate to the upper surface of the upper cover plate 21. A plurality of groups of the positioning structure 212 and the positioning mating structure 223 may be provided, and the plurality of groups of positioning structures 212 and the positioning mating structure 223 are provided in one-to-one correspondence. More specifically, the upper surface of the assembly base 220 is provided with a positioning post, and the positioning post can be inserted into the positioning hole of the upper cover plate 21 through an avoidance hole provided on the light shielding film 40.

Referring to FIG. 8, FIG. 8 is a schematic diagram illustrating a gap 23 between edges of a lower surface of an upper cover plate 21 and an upper surface of the lighting and light homogenizing assembly 22.

In an embodiment, a gap 23 is reserved between an edge portion 213 of the upper cover plate 21 facing the lower surface of the lighting and light homogenizing assembly 22 and the upper surface of the lighting and light homogenizing assembly 22, and a portion of the upper surface of the upper cover plate 21 facing the gap 23 is provided as a pressing portion 24 that can be pressed when the upper cover plate 21 is disassembled. The gap 23 can provide a movable space for the upper cover plate 21, and when the pressing portion 24 is pressed down, the upper cover plate 21 can be lifted up, which facilitates the disassembly of the upper cover plate 21.

In an embodiment, there are at least two gaps 23, and the at least two gaps 23 are disposed at two edge portions 213 of the upper cover plate 21 and spaced apart by 180°. In the embodiment where the upper cover plate 21 is configured as a square cover plate, gaps 23 may be provided at two opposite corners of the upper cover plate 21. After this arrangement, when the pressing portion 24 of the upper cover plate 21 is pressed, the upper cover plate 21 moves downward at one gap 23, and warps up at the other gap 23, and the greater of the warping distance, the easier it is for the user to grasp. For example, the gap 23 may be formed by providing a small thickness at the edge portion 213 of the upper cover plate 21. In this embodiment, the gap 23 is formed by providing a chamfer at the edge portion 213.

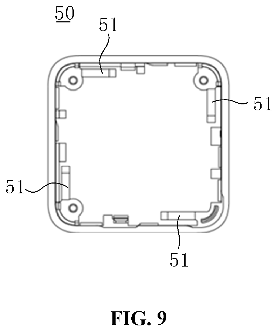

Referring to FIGs. 1, 2, and 9 again, FIG. 9 is a schematic diagram of a partial structure of a housing 50.

The device 100 further includes a housing 50, the control module 10 and the battery module 30 are accommodated in the housing 50, an elastic support member 51 is disposed inside the housing 50, and the upper module 20 is supported on the elastic support member 51. In this way, the housing 50 can accommodate the control module 10 and the battery module 30, to prevent the control module 10 and the battery module 30 from moving, and hide the elastic support member 51 in it at the same time, so that the appearance is simple and compact, and the integration level is high. The battery module 30 may be a CR2032 battery, but is not limited thereto, and may also be another rechargeable battery.

In an embodiment, the elastic support member 51 includes a cantilever foot integrally formed on the housing 50. In this way, there is no need for an elastic member such as a spring, resulting in a simple structure and good processability. A plurality of elastic support members 51 may be provided, the plurality of elastic support members 51 jointly support the upper module 20, the support force is uniform, and the force of each supporting foot is small. In the embodiment shown in FIG. 9, four elastic support members 51 are provided, and the elastic support members 51 are arranged in pairs in a mutually opposite manner. The upper and lower floating range of the elastic support member 51 is the overall stroke of the device 100, and when the elastic support member 51 is not pressed, the elastic support member 51 is in the initial position, the elastic support member 51 is supported at the bottom of the lighting and light homogenizing assembly 22, the button 12 is in contact with the button gasket 35, and when the upper cover plate 21 is pressed, the upper cover plate 21 drives the lighting and light homogenizing assembly 22 to move downward, the stroke is compressed, and the pressure is conducted to the button 12 and triggers the signal transmitting unit.

In an embodiment, as shown in FIG. 2, a separator 60 is disposed in the housing 50, the separator 60 may be connected to the housing 50 by using a screw, and the control module 10 is supported and connected above the separator 60. The battery module 30 is disposed below the separator 60. A hole 61 is provided in a middle portion of the separator 60, an elastic piece is provided at a portion of the control module 10 facing the hole 61, and the elastic piece is electrically connected to the battery module 30.

The housing 50 includes a bottom shell 52 located below the battery module 30 and an annular wall 53, the bottom shell 52 blocks a lower open end of the annular wall 53, and the upper cover plate 21 blocks an upper open end of the annular wall 53, so that the housing 50 forms an accommodating cavity inside. The lighting and light homogenizing assembly 22, the control module 10, and the battery module 30 are all accommodated in the accommodating cavity of the housing 50. The bottom shell 52 and the annular wall 53 may be connected by clamping, but are not limited thereto.

The above description are only some embodiments of the present disclosure and is not intended to limit the present disclosure, and any modifications, equivalent substitutions, improvements and the like made within the spirit and the principle of the present disclosure shall fall within the protection scope of the present disclosure.

## Claims

1. A one-key control device, comprising:
a control module comprising a button and a signal transmitting unit, wherein when the button is pressed, the signal transmitting unit is triggered to transmit a control signal;
an upper module elastically supported above the control module, wherein the upper module is configured to, under a pressing force, enable the button to be pressed; and
a battery module below the control module, wherein the battery module is electrically connected to the control module to supply power to the control module.

2. The one-key control device according to claim 1, wherein the upper module comprises an upper cover plate and a lighting and light homogenizing assembly that are connected to each other,
wherein the upper cover plate is provided with a functional identification pattern that transmits light, and
wherein the lighting and light homogenizing assembly is below the upper cover plate and comprises a light source, the light source is electrically connected to the control module, and the light source is controlled to emit light to illuminate the functional identification pattern.

3. The one-key control device according to claim 2, wherein the upper cover plate is detachably connected to the lighting and light homogenizing assembly by magnetic attraction.

4. The one-key control device according to claim 2 or claim 3, wherein
a gap is between an edge portion of the upper cover plate facing a lower surface of the lighting and light homogenizing assembly and the lighting and light homogenizing assembly, and
a portion of an upper surface of the upper cover plate facing the gap is a pressing portion that is able to be pressed when the upper cover plate is disassembled.

5. The one-key control device according to claim 4, wherein at least two gaps are provided, and the at least two gaps are spaced apart by 180° at the edge portion.

6. The one-key control device according to anyone of claims 2 to 5, wherein one of the upper cover plate and the lighting and light homogenizing assembly is provided with a positioning structure, and the other of the upper cover plate and the lighting and light homogenizing assembly is provided with a positioning mating structure,
wherein the positioning structure and the positioning mating structure are engaged and positioned in a plane parallel to the upper cover plate.

7. The one-key control device according to anyone of claims 2 to 6, wherein the lighting and light homogenizing assembly further comprises an assembly base for mounting the light source and a light homogenizing film mounted on the assembly base,
wherein the light homogenizing film is located directly below the functional identification pattern and is disposed within a light-emitting range of the light source.

8. The one-key control device according to claim 7, further comprising:
a light shielding film between the upper cover plate and the lighting and light homogenizing assembly,
wherein the light shielding film is made of a light absorbing material, and a portion of the light shielding film facing the light homogenizing film is provided with a through hole.

9. The one-key control device according to anyone of claims 1 to 8, further comprising:
a housing configured to accommodate the control module and the battery module,
wherein an elastic support member is provided in the housing, and the upper module is supported by the elastic support member.

10. The one-key control device according to claim 9, wherein the elastic support member comprises a cantilever foot integrally formed on an inner surface of the housing.
